# FASCICULE DE BREVET EUROPEEN

(11) **EP 1 737 917 B1**
(45) Date de publication et mention de la délivrance du brevet: **24.08.2016**
(21) Numéro de dépôt: 05757125.9
(22) Date de dépôt: 15.04.2005
(51) Int. Cl.: C09C 3/10, C08K 3/34

(54) **COMPOSITIONS SOLIDES DIVISEES A FORTE TENEUR EN TALC, DESTINEES A ETRE INCORPOREES DANS UNE MATIERE THERMOPLASTIQUE**
FEINVERTEILTE FESTE ZUSAMMENSETZUNGEN MIT HOHEM GEHALT AN TALK ZUM EINBRINGEN IN THERMOPLASTISCHEM KUNSTSTOFF
DIVIDED SOLID COMPOSITIONS WITH A HIGH TALC CONTENT, WHICH ARE INTENDED TO BE INCORPORATED IN A THERMOPLASTIC MATERIAL

(30) Priorité: 20.04.2004 FR 0404163
(43) Date de publication de la demande: 03.01.2007
(73) Titulaire: Imerys Talc Luzenac France, 09250 Luzenac (FR)
(72) Inventeur: SAINT-GERARD, Yannick, F-06250 Mougins Le Haut (FR); JOUFFRET, Frédéric, F-31810 Venerque (FR)
(74) Mandataire: Margue, Robert Germain
(86) Numéro de dépôt international: PCT/FR2005/000910
(87) Numéro de publication internationale: WO 2005/108506

(56) Documents cités:
- WO-A-01/02475
- FR-A- 2 714 326
- DATABASE WPI Section Ch, Week 198247 Derwent Publications Ltd., London, GB; Class A86, AN 1982-00842J XP002314123 & JP 57 167236 A (SUMITOMO RUBBER IND LTD) 15 octobre 1982 (1982-10-15)
- DATABASE WPI Section Ch, Week 198406 Derwent Publications Ltd., London, GB; Class A17, AN 1984-033147 XP002314124 & JP 58 222132 A (MITSUBISHI PETROCHEMICAL CO LTD) 23 décembre 1983 (1983-12-23)

## Description

L'invention concerne un procédé de préparation d'une composition solide divisée à forte teneur en talc, destinée à être incorporée et diluée dans une matière thermoplastique -notamment de type oléfinique tel que polypropylène et polyéthylène-. Elle s'étend aux compositions ainsi préparées, qui présentent un intérêt tout particulier dans la fabrication d'articles en matières thermoplastiques chargés en talc.

Dans l'industrie de la fabrication d'articles en matière(s) thermoplastique(s), l'incorporation d'agents de charge (par exemple, poudre de quartz, fibres de verre, poudre de verre, trichite, talc, carbonate de calcium, kaolin, ...) à des matières premières thermoplastiques pour en réduire le prix et/ou pour améliorer les caractéristiques mécaniques (notamment, résistance thermique, solidité, ...) est une pratique courante. Cette incorporation est principalement réalisée au moyen d'une méthode de mélange par fusion entre une(des) résine(s) thermoplastique(s) et un(des) agent(s) de charge ; cette méthode est couramment désignée par le terme de "compoundage" (*"compounding"* en anglais).

Pour décrire cette méthode de manière schématique, la(les) résine(s) et la(les) agent(s) de charge sont alimentés à une extrudeuse ; une machine qui comporte un fourreau chauffé dans lequel tournent une ou plusieurs vis qui ont pour fonction de mélanger, à fort taux de cisaillement, le mélange de matières, en fusion ou ramolli, et de le forcer à travers une filière. Un mélange homogène sort de l'extrudeuse en joncs. Ces joncs sont ensuite refroidis et découpés en granulés. Le produit obtenu, en forme de granulés, renferme ainsi une quantité déterminée d'agent(s) de charge réparti(s) de façon homogène dans une matrice thermoplastique. Ce produit, appelé "compound" ou composite, est utilisé par l'industrie de la mise en forme des matières thermoplastiques où il fait office de matériaux de départ dans la mise en oeuvre des techniques de moulage (par injection, compression ou rotation) et/ou d'extrusion et/ou dans celle d'autres procédés de fabrication d'articles en matière(s) thermoplastique(s).

Au sein des installations traditionnelles propres à ces différentes techniques de mise en forme, les composites sont fondus et mélangés avec un taux de cisaillement très faible, voir quasi nul, avant de prendre forme lors du refroidissement.

Concernant la fabrication des composites (mélange solide divisé d'une matière thermoplastique et d'au moins un agent de charge), parce que les installations déjà existantes dans ce domaine sont peu adaptées pour fonctionner avec des poudres volatiles, et que sous forme de fines poudres, le talc est lui-même très volatil, son incorporation dans les résines thermoplastiques pose en pratique de multiples problèmes, et en particulier :
- lors du pesage et du dosage, une partie non négligeable de la poudre reste en suspension dans l'air, au-dessus des instruments de mesure,
- lors de la charge du mélangeur, on observe des phénomènes de refoulement du talc à travers les trémies d'alimentation et la formation d'une quantité élevée de poussière,
- lors du mélange par fusion (compoundage) dans l'extrudeuse, une partie de la poudre de talc reste en suspension dans l'air à l'intérieur de la machine et ne vient pas se mélanger à la résine thermoplastique ; une autre partie non négligeable, de part la très faible densité de la poudre, reste au-dessus de la nappe de résine (généralement en forme de granulés de densité bien supérieure) et n'est pas entraînée par la vis ou les vis sans fin de l'extrudeuse.

Pour toutes ces raisons, les indications concernant la teneur de talc incorporé dans les composites thermoplastiques, ainsi que les articles obtenus à partir de ces composites ne sont jamais très fiables, et l'homogénéité de la distribution des particules de talc se révèle bien souvent imparfaite.

Pour remédier à ces inconvénients, propres à la manipulation des poudres volatiles sources de poussières, US 4 241 001 propose de mettre les poudres de talc en forme de granulés moins pulvérulents, plus faciles à transporter, puis à peser et à doser. Ultérieurement, ces granulés concentrés en poudre de talc sont dilués directement dans une matière thermoplastique, par mélange par fusion, pour former un composite thermoplastique chargé en talc. Au cours de ce mélange par fusion avec une résine thermoplastique, par malaxation à fort taux de cisaillement au niveau de la(des) vis sans fin de l'extrudeuse, les granulés de talc se désagrègent en libérant les particules de talc qui se dispersent alors dans la matière thermoplastique fondue. Avec des granulés de talc de forme et de densité apparente voisines ou équivalentes à celles de la matière thermoplastique à doper (généralement aussi sous forme de granulés), la qualité des composites obtenus par mélange par fusion, à l'extrudeuse, s'en trouve d'autant plus améliorée.

En particulier, US 4 241 001 décrit un procédé de compaction de poudres en granulés, qui consiste à ajouter un agent mouillant à la poudre, notamment de l'eau. La composition pâteuse ainsi obtenue est ensuite transformée en granulés. L'adjonction de certains agents est préconisée pour augmenter la cohésion des granulés (émulsion huileuse, liant de type mélasse, liquide oléagineux, ...).

Cependant, la cohésion et la stabilité des granulés de talc obtenus sont telles qu'il est difficile, par la suite, de redisperser le talc en particules de finesse proche de celle des grains de la poudre initiale (avant granulation), et ceci, malgré le fort taux de cisaillement des extrudeuses. On s'éloigne ainsi des propriétés initialement recherchées pour le composite, et pour lesquelles une granulométrie particulière avait été précisément définie pour le talc ; une granulométrie qui influe sensiblement sur les caractéristiques mécaniques et physiques du composite, et surtout sur celles du produit final.

Par ailleurs, on connaît aussi des compositions solides dispersées, appelées "mélanges-maîtres" (ou "*masterbatches*", en anglais) à base de talc, existant généralement sous forme de granulés, et consistant en un mélange de poudre de talc (en quantité prépondérante), d'une résine thermoplastique (par exemple une résine de polypropylène, de polyéthylène, ...) jouant le rôle de liant, et d'un agent dispersant.

Produits sur extrudeuse à fort taux de cisaillement à partir d'une poudre de talc ou d'un talc densifié comme décrit par US 4 241 001, les mélanges-maîtres sont généralement destinés à être mélangés par fusion à des matières thermoplastiques, en vue de préparer des composites thermoplastiques dopés qui seront ultérieurement mis en forme pour donner des articles finis. Eventuellement, les mélanges-maîtres peuvent aussi être dilués dans les matières thermoplastiques lors de la mise en forme de ces dernières par des techniques d'extrusion ou de moulage (par injection, compression ou rotation).

Le choix de la résine utilisée comme liant dans ces mélanges-maîtres est important. Cette résine doit être compatible avec la matière thermoplastique dans laquelle le mélange-maître sera incorporé. Elle explique souvent le coût élevé des mélanges-maîtres ainsi que celui des composites obtenus avec ces mélanges-maîtres. Elle conditionne, d'une part, la qualité de redispersion des particules de talc dans la matrice thermoplastique du composite formé ; une bonne répartition est une composante essentielle à une bonne qualité des articles finalement produits. Elle conditionne, d'autre part, la teneur optimale en talc des mélanges-maîtres. Aujourd'hui, malgré l'emploi de malaxeurs de plus en plus puissants, il est reconnu que la teneur pondérale optimale de talc de ces mélanges-maîtres est relativement faible ; elle ne dépasse guère 70 %.

L'invention vise à moderniser les méthodes actuelles de fabrication d'articles en matière thermoplastique dopée en talc qui, comme précédemment indiqué, consistent de manière générale en la réalisation d'une succession de trois étapes fondamentales :
1. obtention d'un talc en poudre ou d'un talc densifié, apte à se disperser en poudre dans une matrice thermoplastique par effet de cisaillement intense dans une extrudeuse (à compoundage),
2. obtention d'un composite (ou compound) souvent coûteux, par mélange par fusion dans une extrudeuse à fort taux de cisaillement, d'un mélange-maître (ou d'une composition équivalente) et d'une matière thermoplastique,
3. obtention d'un article fini en matière thermoplastique dopée par une mise en forme dudit composite, par des techniques de moulage (par injection, compression ou rotation) et/ou d'extrusion.

A cet effet, le principal objectif de l'invention est de proposer une composition solide divisée, à forte teneur en talc, capable de se disperser en une fine poudre lorsqu'elle est mélangée, à faible taux de cisaillement (taux bien inférieur à celui d'une extrudeuse spécifique au compoundage), à une matière thermoplastique, et en particulier lors du moulage (par injection, compression ou rotation) ou de l'extrusion (en vue de la mise en forme) de cette matière thermoplastique.

L'invention vise ainsi à réformer les méthodes de fabrication des articles thermoplastiques chargés en talc en ce qu'elle permet le dopage en talc d'une matière thermoplastique lors de sa mise en forme même, de sorte que la préparation d'un composite (à charge déterminée en talc), produit intermédiaire jusqu'à présent essentiel, soit désormais superflue.

Un autre objectif de l'invention consiste à proposer une composition solide divisée de proportion pondérale en talc d'au moins 75 %, et dont la partie solide bénéficie des caractéristiques suivantes :
- cohésion et tenue propre, compatibles avec une manipulation normale sans rupture ni effritement,
- forme et densité de même ordre que celles de la matière thermoplastique à mouler et à doper,
de façon à ce qu'elle puisse être directement mélangée à des matières thermoplastiques, avec les installations traditionnellement adaptées à la mise en forme de matières thermoplastiques, et ce, tout en permettant une homogénéité de redispersion acceptable du talc dans la matrice thermoplastique et ce, malgré le faible taux de cisaillement qui caractérise ces installations traditionnelles de mise en forme.

Un autre objectif de l'invention est qu'une telle composition solide divisée, obtenue à partir d'une poudre de talc, puisse être utilisable et compatible pour le dopage d'une grande diversité de matières thermoplastiques, notamment de type oléfinique tel que polypropylène et polyéthylène.

Ainsi, l'invention concerne un procédé de préparation d'une composition solide divisée -notamment destinée à être incorporée dans une matière thermoplastique, et en particulier selon une méthode de mélange par fusion à faible taux de cisaillement-. Une telle composition comprend une poudre de talc dont au moins une fraction consiste en des grains de talc liés entre eux sous forme d'agrégats de dimension moyenne supérieure à celle desdits grains de talc.

Pour ce faire, dans un procédé selon l'invention, on réalise les étapes suivantes :
- on mélange sous agitation, une poudre de talc en proportion pondérale au moins de l'ordre de 75 %, par rapport au poids total de ladite composition, et un liant qui comprend une cire de polyéthylène en proportion pondérale au moins de l'ordre de 6 % par rapport au poids total de ladite composition ; pour réaliser ledit mélange, la poudre de talc et la cire de polyéthylène, sous forme solide, sont mis en contact à une température à laquelle ladite cire de polyéthylène est à l'état solide, et tout en maintenant l'agitation, on élève la température,
- après obtention d'un mélange homogène, pulvérulent et dans lequel les grains de talc se trouvent au moins en partie encapsulés par la cire de polyéthylène, on refroidit le mélange, et
- on granule le mélange, au moyen d'une presse à granuler, pour former lesdits agrégats.

Par le terme "granuler", on entend ici une opération d'extrusion du mélange (poudre de talc et cire de polyéthylène) à travers les filières d'une presse à granuler.

Concernant l'étape de mélange, il s'agit d'un mélange à chaud facile à réaliser, entre une poudre de talc et une cire de polyéthylène initialement sous forme solide, et dont le but est d'encapsuler les particules de talc dans une gangue de cire de polyéthylène.

De nombreuses méthodes et installations peuvent être envisagées à cet effet, et qui peuvent faire intervenir aussi bien des mélangeurs de type discontinu (ou *"batch"*) que de type continu.

Par exemple, on peut avantageusement utiliser des mélangeurs munis de moyens d'agitation mécaniques et de moyens de chauffage. A cet effet, on peut citer, à titre d'exemple, des mélangeurs à double enveloppe dans laquelle circule un fluide calorifique tel que de l'huile.

Au cours de cette étape de mélange à chaud, lorsqu'on s'approche de la température de fusion de la cire, probablement dès la température de ramollissement de celle-ci, et alors que le mélange conserve un aspect pulvérulent, on assiste à un phénomène d'effondrement, plus ou moins brutal, du volume du mélange.

Une adhésion des grains de talc entre eux, aux moins en partie recouverts de cire fondue, pourrait être une explication à ce phénomène.

Le choix du matériel ainsi que le réglage des différents paramètres de fonctionnement -notamment de chauffage (de montée en température, de temps de chauffage) et d'agitation du mélange (méthode, vitesse et temps d'agitation, ...)- sont déterminés pour obtenir une homogénéité suffisante du mélange et éviter l'apparition d'une masse pâteuse.

Avantageusement, dès constatation d'une réduction notable du volume du mélange -notamment une réduction de volume d'environ de moitié (par simple appréciation visuelle)-, on met fin à l'étape de mélange à chaud ; on estime que le mélange de talc et de cire est alors suffisamment homogène et complet. Bien entendu, il est possible de laisser le mélange se poursuivre d'avantage, en évitant toutefois l'apparition d'une masse pâteuse tassée.

Avantageusement et selon l'invention, le refroidissement du mélange se fait de manière progressive et continue, par exemple à température ambiante, après extraction hors du mélangeur.

Les essais réalisés par les inventeurs ont permis de montrer qu'avec un tel procédé, et en particulier grâce à l'utilisation d'une cire de polyéthylène, il est possible d'obtenir des agrégats concentrés en talc, notamment en forme de granulés, qui renferment avantageusement une teneur pondérale en talc au moins égale à 75 % et ce, tout en présentant une cohésion propre assurant une rigidité et une bonne stabilité. Ces caractéristiques mécaniques se traduisent par un maintien de forme sans rupture ni effritement excessif (sans émission prononcée de fines, ou poussières) lors de conservation ou manipulation ultérieures de ces agrégats.

Qui plus est, leur dilution dans les résines thermoplastiques, en particulier par un mélange par fusion ne nécessite qu'un taux de cisaillement très faible.

Les travaux des inventeurs ont également mis en évidence que l'addition d'une composition solide divisée selon l'invention, à une matière thermoplastique lors de sa mise en forme -notamment par les techniques et installations traditionnelles de moulage par injection, compression ou rotation, ou d'extrusion-, permettait avantageusement la réalisation simultanée des étapes du dopage en talc et de mise en forme d'un article thermoplastique fini. Bien que le taux de cisaillement soit relativement faible, son effet, sans doute combiné avec celle de la chaleur, est toutefois suffisant pour désagréger et disperser la partie solide de ladite composition, en fines particules de talc dans la matière thermoplastique fondue. Il a aussi été constaté que les particules de talc ainsi dispersées présentent une finesse très proche de celle des grains de la poudre de talc initiale (avant compaction), voire équivalente.

Ainsi, outre le fait de présenter une bonne compatibilité avec un grand nombre de résines thermoplastiques de type oléfinique et une teneur en talc pouvant dépasser sensiblement 75 % et donc de pouvoir constituer une alternative intéressante à l'emploi des mélanges-maîtres ordinaires à base de talc, une composition solide divisée obtenue selon l'invention permet avantageusement de se dispenser, dans la fabrication d'articles thermoplastiques dopés en talc, des composites chargés en talc.

Avantageusement et selon l'invention, on utilise une cire de polyéthylène de masse molaire comprise entre 1 000 et 50 000 g.mol⁻¹.

Concernant l'étape de pressage du mélange à travers les filières d'une presse à granuler, celle-ci conduit à la compaction et à la granulation du mélange. On obtient alors de courts bâtonnets, que l'on peut avantageusement tronçonner, juste à la sortie des filières, de façon à obtenir des agrégats en forme de granulés de taille homogène et bien définie.

A titre de presse à granuler particulièrement adaptée à la mise en oeuvre de l'invention, on peut citer avantageusement les presses de type KAHL® (AMANDUS KAHL NACHF., Allemagne), qui comportent des filières verticales et des rouleaux à axe de rotation verticale.

L'invention peut également être mise en oeuvre au moyen d'une presse à granuler disposant de filières horizontales comme, par exemple, les presses de type CPM® (CPM Europe S.A., France).

Avantageusement et selon l'invention, on mélange à la poudre de talc, une quantité de cire de polyéthylène adaptée pour permettre l'obtention d'agrégats de proportion pondérale en cire de polyéthylène de l'ordre de 20-25 %. La teneur pondérale en talc des agrégats est alors de l'ordre de 75-80 % et le liant, ici utilisé, consiste simplement en une cire de polyéthylène selon l'invention.

Selon une autre variante de mise en oeuvre d'un procédé selon l'invention, on réalise un mélange de talc et de liant en quantités respectives adaptées pour permettre l'obtention d'agrégats de proportion pondérale en talc de l'ordre de 85 à 92 %.

Avantageusement et selon cette variante, on utilise en complément de la cire de polyéthylène, au moins un agent tensioactif choisi parmi : des amines, des sels d'ammonium quaternaire, des sels de polyammonium quaternaire, des acides carboxiliques.

Par amine, on désigne aussi bien des amines primaires, secondaires que tertiaires, aussi bien linéaires que cycliques, saturées qu'insaturées, et éventuellement ramifiées et/ou éthoxylées.

L'agent tensioactif est ici utilisé en une quantité qui correspond à une proportion pondérale de l'ordre de 1 à 2 % du poids des agrégats à obtenir, c'est-à-dire de l'ordre de 1 à 2 % en poids du mélange à réaliser (poudre de talc, cire de polyéthylène et agent tensioactif).

Pour ce faire, avant de procéder au mélange de la poudre de talc et de la cire de polyéthylène, ladite poudre de talc est préalablement chauffée et mélangée audit agent tensioactif et à une température au moins égale à la température de fusion dudit agent tensioactif.

Avantageusement et selon l'invention, on ajoute à la poudre de talc ledit agent tensioactif à l'état liquide.

En recouvrant et en modifiant fonctionnellement la surface des particules de talc, ces agents tensioactifs améliorent sensiblement le pouvoir liant des cires de polyéthylène conformes à l'invention. Dès lors, une quantité très faible d'agent tensioactif permet avantageusement de réduire notablement la quantité de cire de polyéthylène utilisée et d'augmenter, en contrepartie, celle du talc et ce, pour des résultats sensiblement équivalents, voire meilleurs, notamment en terme de stabilité mécanique des granulés. Les agents tensioactifs selon l'invention interviendraient également au niveau de l'aptitude des particules de talc à se redisperser dans la matrice thermoplastique.

De façon surprenante, les inventeurs ont ainsi constaté qu'avec environ 1 % (en proportion pondérale par rapport au mélange total) d'agent tensioactif, il était possible de diminuer de l'ordre de 5 % celle de la cire.

Ainsi, avec cette variante particulière de mise en oeuvre de l'invention, utilisant un(des) agent(s) tensioactif(s), les inventeurs sont parvenus à obtenir des granulés de poudre de talc pouvant présenter avantageusement une proportion pondérale en talc bien supérieure ; une proportion pondérale qui peut dépasser nettement les 85 %.

Avantageusement et selon l'invention, on utilise plus particulièrement un agent tensioactif choisi parmi : une N-N,bis(hydroxyéthyl)amine (par exemple, le Noramox® SH2 de la société CECA, France), une polyétheramine, un oxyde d'amine, une bétaïne, la stéarine (ou acide stéarique), un polydiméthylsiloxane diammonium (par exemple, le Tegopren® 6922, un produit de la firme GOLDSCHMIDT, Allemagne).

Avantageusement et selon l'invention, on utilise une cire de polyéthylène de masse molaire de l'ordre de 3 800 g.mol⁻¹ et de point de fusion de l'ordre de 100°C. A titre de cire de polyéthylène répondant à cette caractéristique, on peut citer la cire AC617A (HONEYWELL, Etats-Unis) qui présente une masse molaire de 3 796 g.mol⁻¹ et un point de fusion de 101°C. Celle-ci est notamment disponible dans le commerce sous la forme d'une poudre blanche.

L'invention s'étend également à des produits susceptibles d'être obtenus à l'issue de la mise en oeuvre d'un procédé selon l'invention, tel que précédemment décrit. En particulier, de tels produits se distinguent en ce qu'ils sont formés à partir d'une poudre de talc transformée en des agrégats -notamment en forme de granulés- à forte teneur pondérale en talc, au moins de l'ordre 75 %, et qui comprennent au moins de l'ordre 6 %, en poids, d'une cire de polyéthylène. Eventuellement, ces agrégats présentent de l'ordre de 1 à 2 %, en poids, d'un agent tensioactif selon l'invention.

L'invention porte aussi sur des compositions solides et divisées qui comprennent des produits répondant à ce descriptif, et couvre plus particulièrement leur application à la fabrication d'article en matière thermoplastique dopée, en particulier en talc.

L'invention concerne ainsi une composition solide divisée -notamment destinée à être incorporée dans une matière thermoplastique, et en particulier lors de la mise en forme de cette matière thermoplastique en un article fini-.

Une telle composition comprend une poudre de talc dont au moins une fraction consiste en des grains de talc liés entre eux sous forme d'agrégats de dimension moyenne supérieure à celle desdits grains de talc. Lesdits agrégats se composent de talc en proportion pondérale au moins de l'ordre de 75 %, et d'un liant qui comprend une cire de polyéthylène. Selon l'invention, la proportion pondérale en cire de polyéthylène desdits agrégats est au moins de l'ordre de 6 %.

Avantageusement et selon l'invention, ladite cire de polyéthylène présente une masse molaire comprise entre 1 000 et 50 000 g.mol⁻¹.

Avantageusement, dans une composition selon l'invention, les agrégats de talc ont la forme de granulés de taille homogène et bien définie.

Selon un aspect particulier de l'invention, avantageusement la proportion pondérale en cire de polyéthylène des agrégats est de l'ordre de 20-25 %.

Avantageusement et selon un autre aspect particulièrement apprécié de l'invention, la proportion pondérale en talc des agrégats est de l'ordre de 85 à 92 %. Selon cet aspect de l'invention, le liant comprend, outre la cire de polyéthylène, de l'ordre de 1 à 2 %, en poids des agrégats, d'un agent tensioactif choisi parmi : des amines, des sels d'ammonium quaternaire, des sels de polyammonium quaternaire, des acides carboxyliques.

Avantageusement et selon l'invention, ledit agent tensioactif est choisi parmi : une N-N,bis(hydroxyéthyl)amine (par exemple, le Noramox® SH2 de la société CECA, France), une polyétheramine, un oxyde d'amine, une bétaïne, la stéarine, un polydiméthylsiloxane diammonium (par exemple, le Tegopren® 6922, un produit de la firme GOLDSCHMIDT, Allemagne).

Avantageusement et selon l'invention, ladite cire de polyéthylène présente une masse molaire de l'ordre de 3 800 g.mol⁻¹ et un point de fusion de l'ordre de 100°C -notamment la cire AC617A (HONEYWELL, Etats-Unis) de masse molaire de 3 796 g.mol⁻¹ et de point de fusion de 101°C-.

Avantageusement et selon l'invention, lesdits agrégats présentent une densité apparente comprise entre 1,2 et 1,7 -notamment entre 1,4 et 1,5-.

L'invention s'étend enfin à un procédé de fabrication d'un article en matière thermoplastique dopée en talc, dans lequel le dopage en talc de ladite matière thermoplastique est réalisé simultanément à sa mise en forme.

Pour ce faire, une composition solide divisée selon l'invention est utilisée. Elle est mélangée à la matière thermoplastique au cours de sa mise en forme. A cet effet, on utilise les techniques et installations traditionnelles qui sont adaptées au moulage -notamment par injection, compression ou rotation- ou à l'extrusion.

L'invention concerne aussi un procédé de préparation d'une composition solide divisée à base de talc, une composition solide divisée à base de talc, ainsi qu'une utilisation de cette composition, caractérisés en combinaison, par tout ou partie des caractéristiques ci-dessus ou ci-après.

D'autres buts, caractéristiques et avantages de l'invention apparaîtront à la lecture de la description détaillée qui suit.

Les exemples exposés ci-après correspondent à des formulations particulières d'agrégats de poudre de talc selon l'invention et pour lesquelles il a pu être apprécié, une cohésion et une tenue propre compatibles avec une manipulation normale, sensiblement sans rupture ni effritement.

Ces agrégats qui comprennent une proportion pondérale de talc d'au moins 75 %, atteignant même 92 %, se présentent sous la forme de granulés composés de petits tronçons cylindriques de poudre de talc agglomérée. La densité apparente de ces granulés est généralement comprise entre 1,2 et 1,7 -notamment entre 1,4 et 1,5- (mesures de densités apparentes effectuées selon la norme ISO 787/11).

Des tests de dispersion du talc dans une matrice thermoplastique ont par ailleurs été entrepris avec différentes compositions de granulés conformes à l'invention. Les résultats, obtenus et présentés dans les tableaux ci-après, attestent d'une bonne redispersion du talc dans les matrices thermoplastiques. Ces résultats permettent de confirmer que ces granulés, de fabrication simple et peu coûteuse par rapport à celle des mélanges-maîtres, peuvent avantageusement être dilués de façon homogène dans des matières thermoplastiques en fusion, avec un faible taux de cisaillement. Dès lors, ils peuvent être avantageusement utilisés lors de la mise en forme de ces matières thermoplastiques pour les doper en talc, par la même occasion.

### • Méthode de préparation

La préparation d'une composition solide divisée selon l'invention se déroule en deux étapes principales : mélange et granulation.

L'étape de mélange consiste à traiter la poudre de talc par une cire de polyéthylène fondue. Préalablement à l'incorporation de ladite cire, la poudre de talc peut éventuellement être traitée au moyen d'un agent tensioactif afin d'optimiser l'effet de la cire.

Le mélange est effectué de préférence au moyen d'un mélangeur muni de moyens d'agitation mécaniques et de moyens de chauffage. En particulier, on peut utiliser un mélangeur de type HENSCHEL® (HENSCHEL INDUSTRIETECHNIK GmbH, Allemagne) qui dispose d'un récipient (d'une contenance de l'ordre de 500 litres) muni d'une couverture d'huile chaude permettant le chauffage du mélange, et d'un dispositif de mélange mécanique, en l'espèce, un système à double pâle. Une sonde thermique interne permet de contrôler la température du mélange.

On peut aussi utiliser un mélangeur plus rudimentaire, de type Moritz® (MORITZ S.A., France) présentant une contenance de 200 litres.

On charge le mélangeur avec, par exemple, 40 kg de poudre de talc. En particulier, il a été testé des talcs de granulométrie moyenne de l'ordre de 3,5 µm (par exemple, le talc LUZENAC A20 commercialisé par LUZENAC NAINTSCH, Autriche) et de l'ordre de 1,7 µm (par exemple, le talc Steamic OOS commercialisé par TALC DE LUZENAC S.A., France).

On règle le chauffage de façon à porter progressivement le talc à une température au moins égale à la température de fusion de la cire de polyéthylène.

Le talc, à l'intérieur du mélangeur, est maintenu sous agitation permanente.

Dans le cas d'une synthèse de granulés à base d'une poudre de talc, comprenant une quantité de cire de polyéthylène AC617A (de point de fusion de 101°C) et exempts d'agent tensioactif, cette température de réglage est fixée à environ 120°C.

Pendant la montée en température de la poudre de talc, et de préférence avant que celle-ci n'atteigne le point de fusion de la cire de polyéthylène (101°C, pour la cire AC617A), cette dernière, préalablement dosée, est incorporée au talc. Bien entendu, on peut ajouter la cire alors que la poudre de talc est encore froide.

Le mélange est malaxé efficacement jusqu'à homogénéisation, pendant la montée en température du talc.

De bons résultats ont aussi été obtenus en ajoutant la cire de polyéthylène AC617A directement dans du talc préalablement porté à 90°C.

Il n'y a donc pas de conditions et de paramètres absolus à respecter pour obtenir un mélange homogène conforme à l'invention. Les caractéristiques exposées ci-dessus ou ci-après et qui sont relatives à cette étape de mélange, mise à part la composition même du mélange ne constituent en rien des conditions nécessaires dans l'absolu. Ces caractéristiques se rapportent seulement à des modes de réalisation préférentiels, donnés à titre d'exemples non limitatifs.

Dans le cas d'une formulation de granulés comprenant, en plus de la cire de polyéthylène AC617A, un agent tensioactif, notamment de type Tegopren® 6922, Noramox® SH2 ou encore stéarine, tels que ceux déjà testés par les inventeurs, on fixe le chauffage du talc également à une température de l'ordre de 120°C.

L'incorporation d'une quantité prédéterminée d'un agent tensioactif, en particulier à l'état liquide et notamment choisi parmi l'un de ceux précédemment cités, se réalise avant celle de la cire de polyéthylène et de préférence lorsque le talc est déjà chaud. En effet, il a été observé que le traitement du talc à chaud par lesdits agents tensioactifs, à une température de l'ordre de 60-80°C, améliore considérablement, par la suite, le débit de granulation (multipliant par 10 ce débit, par rapport à un traitement à froid) et la qualité des granulés (beaucoup moins friables).

Une fois l'incorporation de l'agent tensioactif réalisée, et le prémélange malaxé jusqu'à homogénéisation, on procède à l'ajout de la cire de polyéthylène.

Dans ces deux modes principaux de mise en oeuvre de l'invention (avec ou sans agent tensioactif), une fois la cire de polyéthylène ajoutée et lorsque la température du mélange atteint un certain niveau, on observe une diminution rapide du volume du mélange. Généralement, cette diminution de volume intervient bien avant que la température du mélange n'ait atteint la température de fusion de ladite cire. Des tests ont permis de constater que la température marquant le changement de volume du mélange pouvait varier en fonction de nombreux paramètres et conditions de mise en oeuvre du mélange (teneur en cire de la composition, vitesse des pâles du mélangeur, répartition de la chaleur au sein du mélange, ...).

On considère que la malaxation du mélange devient suffisante, c'est-à-dire que l'état d'homogénéité du mélange a été atteint, lorsque, par simple appréciation visuelle, celui-ci présente un volume réduit d'environ de moitié, par rapport à son volume initial.

La malaxation peut alors être stoppée et on laisse refroidir le mélange passivement jusqu'à une température au moins inférieure à la température de ramollissement de la cire, notamment hors du mélangeur encore chaud.

L'étape de granulation qui suit, permet de transformer en agrégats le mélange provenant du malaxage. Elle est réalisée au moyen d'une presse à granuler. Celle-ci peut être avantageusement de type KAHL® (AMANDUS KAHL NACHF., Allemagne) disposant de filières verticales. En particulier, on peut utiliser la presse Kahl 33600, notamment équipée d'une filière 3-12 mm.

Les débits sont de l'ordre de 400-500 kg/h. La température en sortie des granulés est alors d'environ 70°C.

La fabrication d'une composition solide divisée selon l'invention peut également être réalisée au moyen d'une presse à granuler disposant de filières horizontales comme, par exemple, une presse de type CPM® (CPM EUROPE S.A., France).

### • Tests de distribution du talc

Différentes compositions solides divisées conformes à l'invention ont été analysées pour leur qualité de dispersion dans une matrice de polypropylène. Pour ce faire, des pièces en polypropylène dopé en talc ont été réalisées avec un polypropylène de type Novolen 1103K (BASELL, France) et différentes compositions solides divisées (ayant été préalablement séchées après fabrication), dans une proportion pondérale polypropylène/granulés de talc de l'ordre de 90:10.

Certains des mélanges polypropylène/talc ainsi préparés ont été injectés sur une presse industrielle Hercule H 2060-470-200 (BILLION S.A., France) équipée d'une vis avec embout malaxeur, une presse industrielle classiquement utilisée pour mettre en forme des composites ou des matières thermoplastiques selon une technique ordinaire de mise en forme de matières thermoplastiques par injection.

Les pièces injectées sont ici réalisées selon des conditions de plastification standards (température, vitesse, pression, ...) ; des tests préliminaires ayant montré que les paramètres d'injection (contre pression, températures, temps de séjours, vitesse de vis, décompression avant moulage) n'avaient aucune influence sur la dispersion du talc dans la résine.

Selon cette première technique de mise en forme, les pièces obtenues ont la forme d'un disque de 2 mm d'épaisseur.

D'autres mélanges polypropylène/talc, au lieu d'être mis en forme par injection, ont été extrudés sur une extrudeuse monovis IDE ME 60/3 (équipée d'une grille de contre-pression, avec des trous de 2,4 mm de diamètre), et calandrés à l'aide d'une filière plate et d'un banc de calandrage SAMAFOR TA 800 équipé d'une filière plate de 600 mm. On obtient alors des feuilles de 1 à 2 mm d'épaisseur. Les débits d'extrusion sont de l'ordre de 15 kg/h avec une vitesse de rotation de la vis, de l'extrudeuse, fixée à 34 tr/min, c'est-à-dire à une vitesse (et donc un taux de cisaillement) bien en-deçà de la vitesse habituellement appliquée pour la mise en forme d'une matière thermoplastique.

Quelle que soit la technique de mise en forme utilisée (extrusion ou moulage par injection), des échantillons sont découpés dans les pièces formées (disques ou feuilles), puis pressés en des films de 50 µm d'épaisseur.

La dispersion des granulés dans la matrice de polypropylène est appréciée par le nombre d'agglomérats de talc visibles sur ces films (talc non dispersé), témoignant ainsi de la qualité de redispersion du talc des compositions solides dispersées précédemment obtenues.

Le comptage des agglomérats se réalise avec une binoculaire réglée au grossissement minimum et sur une surface de film de 4 cm².

A titre de référence, on dispose d'un composite de Borealis MB 475 U (BOREALIS, France) chargé à 40 % en talc que l'on dilue avant extrusion (à 190°C) dans une résine polypropylène SABIC 83 MF 10 (SABIC, France) de grade 1.5 pour obtenir un mélange final de 8 % de talc. Aucun agglomérat de talc non dispersé n'est visible.

Pour quelques compositions, en particulier pour les granulés les plus concentrés en talc (pour lesquels une extrusion à 34 tr/min ne permettait pas une dispersion acceptable), des essais complémentaires ont été effectués pour tenter d'optimiser la dispersion du talc. Les pièces en polypropylène dopé à partir de telles compositions ont été moulées, par extrusion, avec une vitesse de rotation de la vis de l'extrudeuse fixée à 90 tr/min (au lieu de 34 tr/min), une vitesse de fonctionnement proche des conditions industrielles standards. On observe alors une amélioration sensible de la dispersion.

Les résultats de ces différents tests de dispersion sont résumés dans les deux tableaux qui suivent.

Le tableau 1 présente la dispersion du talc dans les pièces moulées par injection. Le tableau 2 présente la dispersion du talc dans les pièces formées par extrusion de feuille.

Dans ces tableaux, l'échelle de notation suivante est utilisée pour évaluer la qualité de dispersion du talc :
+++ : dispersion excellente du talc
++ : peu d'agglomérats de talc
+ : nombre d'agglomérats élevé
- : beaucoup d'agglomérats (rédhibitoire pour l'application).

**Tableau 1**

| **Talc** (Steamic OOS) | **cire PE** (AC617A) | **agent tensioactif** (Tegopren) | **Dispersion** (par moulage par injection) |
|---|---|---|---|
| 75 | 25 | - | +++ |
| 80 | 20 | - | ++ |
| 80 | 19 | 1 | +++ |

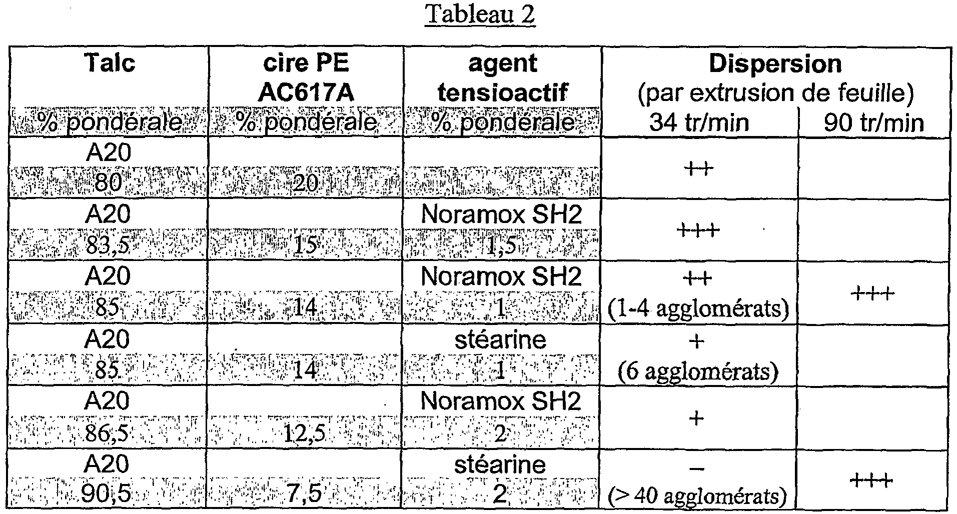

## Revendications

1. - Procédé de préparation d'une composition solide divisée comprenant une poudre de talc dont au moins une fraction consiste en des grains de talc liés entre eux sous forme d'agrégats de dimension moyenne supérieure à celle desdits grains de talc,
**caractérisé en ce qu'**on réalise les étapes suivantes :
- on mélange sous agitation, une poudre de talc en proportion pondérale au moins de l'ordre de 75 %, par rapport au poids total de ladite composition, et un liant qui comprend une cire de polyéthylène en proportion pondérale au moins de l'ordre de 6 % par rapport au poids total de ladite composition ; pour réaliser ledit mélange, la poudre de talc et la cire de polyéthylène, sous forme solide, sont mis en contact à une température à laquelle ladite cire de polyéthylène est à l'état solide, et tout en maintenant l'agitation, on élève la température,
- après obtention d'un mélange homogène, pulvérulent et dans lequel les grains de talc se trouvent au moins en partie encapsulés par la cire de polyéthylène, on refroidit le mélange, et
- on granule le mélange, au moyen d'une presse à granuler, pour former lesdits agrégats.

2. - Procédé selon la revendication 1, **caractérisé en ce qu'**on met fin à l'étape de mélange à chaud après avoir constaté une réduction notable du volume du mélange.

3. - Procédé selon l'une des revendications 1 ou 2, **caractérisé en ce qu'**on utilise une cire de polyéthylène de masse molaire comprise entre 1 000 et 50 000 g.mol⁻¹.

4. - Procédé selon l'une des revendications 1 à 3, **caractérisé en ce qu'**on tronçonne le mélange à la sortie de façon à obtenir des agrégats en forme de granulés de taille homogène et définie.

5. - Procédé selon l'une des revendications 1 à 4, **caractérisé en ce qu'**on mélange à la poudre de talc, une quantité de cire de polyéthylène adaptée pour permettre l'obtention d'agrégats de proportion pondérale en cire de polyéthylène de l'ordre de 20-25 %.

6. - Procédé selon l'une des revendications 1 à 4, **caractérisé en ce qu'**on réalise un mélange de talc et de liant en quantités respectives adaptées pour permettre l'obtention d'agrégats de proportion pondérale en talc de l'ordre de 85 à 92 %.

7. - Procédé selon la revendication 6, **caractérisé en ce que**, avant de procéder au mélange entre la poudre de talc et la cire de polyéthylène, on mélange à ladite poudre de talc préchauffée, 1 à 2 % d'au moins un agent tensioactif choisi parmi : des amines, des sels d'ammonium quaternaire, des sels de polyammonium quaternaire, des acides carboxiliques,
on réalise ledit mélange à une température au moins égale à la température de fusion dudit(desdits) agent(s) tensioactif(s).

8. - Procédé selon la revendication 7, **caractérisé en ce qu'**on utilise ledit agent tensioactif à l'état liquide.

9. - Procédé selon l'une des revendications 7 ou 8, **caractérisé en ce qu'**on utilise un agent tensioactif choisi parmi : une N-N,bis(hydroxyéthyl)amine, une polyétheramine, un oxyde d'amine, la bétaïne, la stéarine, un polydiméthylsiloxane diammonium.

10. - Procédé selon l'une des revendications 1 à 9, **caractérisé en ce qu'**on utilise une cire de polyéthylène de masse molaire de l'ordre de 3 800 g.mol⁻¹ et de point de fusion de l'ordre de 100°C.

11. - Procédé selon l'une des revendications 1 à 10, **caractérisé en ce que**, après l'étape de mélange, on refroidit de manière passive le mélange.

12. - Composition solide divisée comprenant une poudre de talc dont au moins une fraction consiste en des grains de talc liés entre eux sous forme d'agrégats de dimension moyenne supérieure à celle desdits grains de talc, **caractérisée en ce que** lesdits agrégats se composent de talc en proportion pondérale au moins de l'ordre de 75 %, et d'un liant comprenant une cire de polyéthylène ; la proportion pondérale en cire de polyéthylène desdits agrégats étant au moins de l'ordre de 6 %.

13. - Composition selon la revendication 12, **caractérisée en ce que** ladite cire de polyéthylène présente une masse molaire comprise entre 1 000 et 50 000 g.mol⁻¹.

14. - Composition selon l'une des revendications 12 ou 13, **caractérisée en ce que** lesdits agrégats de talc ont la forme de granulés de taille homogène et définie.

15. - Composition selon l'une des revendications 12 à 14, **caractérisée en ce que** la proportion pondérale de la cire de polyéthylène est de l'ordre de 20-25 %.

16. - Composition selon l'une des revendications 12 à 14, **caractérisée en ce que** la proportion pondérale en talc des agrégats est de l'ordre de 85 à 92 %.

17. - Composition selon la revendication 16, **caractérisée en ce que** ledit liant comprend, en poids des agrégats, de l'ordre de 1 à 2 % d'un agent tensioactif choisi parmi : des amines, des sels d'ammonium quaternaire, des sels de polyammonium quaternaire, des acides carboxiliques.

18. - Composition selon la revendication 17, **caractérisée en ce que** ledit agent tensioactif est choisi parmi : une N-N,bis(hydroxyéthyl)amine, une polyétheramine, un oxyde d'amine, la bétaïne, la stéarine, un polydiméthylsiloxane diammonium.

19. - Composition selon l'une des revendications 12 à 18, **caractérisée en ce que** ladite cire de polyéthylène présente une masse molaire de l'ordre de 3 800 g.mol⁻¹ et un point de fusion de l'ordre de 100°C.

20. - Composition selon l'une des revendications 12 à 19, **caractérisée en ce que** lesdits agrégats présentent une densité apparente comprise entre 1,2 et 1,7.

21. - Composition selon l'une des revendications 12 à 20, **caractérisée en ce que** lesdits agrégats présentent une densité apparente comprise entre 1,4 et 1,5.

22. - Procédé de fabrication d'un article en matière thermoplastique dopée en talc, dans lequel le dopage en talc de ladite matière thermoplastique est réalisé simultanément à sa mise en forme ; une composition solide divisée conforme à l'une des revendications 12 à 21 est utilisée.

23. - Procédé selon la revendication 22, **caractérisé en ce qu'**on utilise une technique de mise en forme de matière thermoplastique choisie parmi : l'extrusion, le moulage par injection, compression ou rotation.

## Patentansprüche

1. Herstellungsverfahren für eine feinverteilte feste Zusammensetzung, umfassend ein Talkpulver, wovon mindestens ein Teil aus Talkkörnern besteht, die untereinander zu Aggregaten verbunden sind, mit einer durchschnittlichen Größe, größer der der Talkkörner,
**dadurch gekennzeichnet, dass** die folgenden Schritte ausgeführt werden:
Vermischen bei Bewegung eines Talkpulvers mit gewichtetem Anteil mindestens um 75%, gegenüber dem Gesamtgewicht der Zusammensetzung, und eines Binders, enthaltend ein Polyethylenwachs, mit gewichtetem Anteil mindestens um 6%, gegenüber dem Gesamtgewicht der Zusammensetzung; zum Herstellen des Gemischs, wobei das Talkpulver und das Polyethylenwachs, in fester Form, bei einer Temperatur zusammengebracht werden, bei der das Polyethylenwachs im Festzustand ist, und wobei bei Weiterführen der Bewegung die Temperatur erhöht wird,
nach Erhalten eines homogenen pulverförmigen Gemischs, in dem die Talkkörner mindestens zum Teil vom Polyethylenwachs umhüllt sind, Abkühlen des Gemischs, und
Granulieren des Gemischs mit einer Granulationspresse, zum Bilden der Aggregate.

2. Verfahren gemäß Anspruch 1, **dadurch gekennzeichnet, dass** der Schritt des Heißmischens beendet wird, nachdem eine merkliche Verringerung des Volumens des Gemischs festgestellt worden ist.

3. Verfahren gemäß einem der Ansprüche 1 oder 2, **dadurch gekennzeichnet, dass** ein Polyethylenwachs mit Molarmasse zwischen 1.000 und 50.000 g·mol⁻¹ eingesetzt wird.

4. Verfahren gemäß einem der Ansprüche 1 bis 3, **dadurch gekennzeichnet, dass** das Gemisch beim Austreten so aufgeteilt wird, dass Aggregate in der Form von Granulaten mit homogener und definierter Größe erhalten werden.

5. Verfahren gemäß einem der Ansprüche 1 bis 4, **dadurch gekennzeichnet, dass** zum Talkpulver eine Menge Polyethylenwachs zugemischt wird, angepasst zum Ermöglichen, dass Aggregate in gewichtetem Polyethylenwachsanteil in der Größenordnung von 20 bis 25 % erhalten werden.

6. Verfahren gemäß einem der Ansprüche 1 bis 4, **dadurch gekennzeichnet, dass** ein Gemisch aus Talk und Binder bereitgestellt wird mit jeweiligen Mengen, angepasst zum Ermöglichen, dass Aggregate in gewichtetem Talkanteil in der Größenordnung von 85 bis 92 % erhalten werden.

7. Verfahren gemäß Anspruch 6, **dadurch gekennzeichnet, dass**, vor dem Vermischen des Talkpulvers und des Polyethylenwachses das vorerhitzte Talkpulver mit 1 bis 2 % mindestens eines Tensids vermischt wird, ausgewählt aus der Gruppe Amine, quaternäre Ammoniumsalze, quaternäre Polyammoniumsalze, Carboxylsäuren,
dass das Vermischen bei einer Temperatur erfolgt, die mindestens gleich einer Schmelztemperatur des Tensids oder der Tenside ist.

8. Verfahren gemäß Anspruch 7, **dadurch gekennzeichnet, dass** das Tensid im flüssigen Zustand verwendet wird.

9. Verfahren gemäß einem der Ansprüche 7 oder 8, **dadurch gekennzeichnet, dass** ein Tenisid verwendet wird, ausgewählt aus der Gruppe N,N-bis(Hydroxyethyl)amine, Polyetheramine, Aminoxyde, Betain, Stearin, Diammoniumpolydimethylsiloxane.

10. Verfahren gemäß einem der Ansprüche 1 bis 9, **dadurch gekennzeichnet, dass** ein Polyethylenwachs mit einer Molarmasse im Größenbereich von 3.800 g·mol⁻¹ und einem Schmelzpunkt im Bereich von 100°C verwendet wird.

11. Verfahren gemäß einem der Ansprüche 1 bis 10, **dadurch gekennzeichnet, dass**, nach dem Vermischungsschritt, das Gemisch passiv abgekühlt wird.

12. Feinverteilte feste Zusammensetzung, umfassend ein Talkpulver, wovon mindestens ein Teil aus zu Aggregaten untereinander verbundenen Talkkörnern besteht, mit einer Durchschnittsgröße größer als die der Talkkörner, **dadurch gekennzeichnet, dass** die Aggregate aus Talk bestehen mit einem gewichteten Anteil von mindestens um 75 %, und einem Binder, umfassend ein Polyethylenwachs; wobei der gewichtete Polyethylenwachsanteil der Aggregate mindestens um 6 % ist.

13. Zusammensetzung gemäß Anspruch 12, **dadurch gekennzeichnet, dass** das Polyethylenwachs eine Molarmasse zwischen 1.000 und 50.000 g·mol⁻¹ hat.

14. Zusammensetzung gemäß einem der Ansprüche 12 oder 13, dadurch gekenn-zeichnet, dass die Talkaggregate die Form von Granulaten mit homogener und definierter Größe haben.

15. Zusammensetzung gemäß einem der Ansprüche 12 bis 14, dadurch gekenn-zeichnet, dass der gewichtete Polyethylenwachsanteil der Aggregate im Bereich von 20 bis 25 % ist.

16. Zusammensetzung gemäß einem der Ansprüche 12 bis 14, **dadurch gekennzeichnet, dass** der gewichtete Talkanteil der Aggregate im Bereich von 85 bis 92 % ist.

17. Zusammensetzung gemäß Anspruch 16, **dadurch gekennzeichnet, dass** der Binder umfasst, auf der Basis des Gewichts der Aggregate, um 1 bis 2 % eines Tensids, ausgewählt aus der Gruppe Amine, quaternäre Ammoniumsalze, quaternäre Polyammoniumsalze, Carboxylsäuren.

18. Zusammensetzung gemäß Anspruch 17, **dadurch gekennzeichnet, dass** das Tensid ausgewählt ist aus der Gruppe N,N-bis(Hydroxyethyl)amine, Polyetheramine, Aminoxyde, Betain, Stearin, Diammoniumpolydimethylsiloxane.

19. Zusammensetzung gemäß einem der Ansprüche 12 bis 18, **dadurch gekennzeichnet, dass** das Polyethylenwachs eine Molarmasse im Größenbereich von 3.800 g·mol⁻¹ und einem Schmelzpunkt im Bereich von 100°C hat.

20. Zusammensetzung gemäß einem der Ansprüche 12 bis 19, **dadurch gekennzeichnet, dass** die Aggregate eine scheinbare Dichte zwischen 1,2 und 1,7 haben.

21. Zusammensetzung gemäß einem der Ansprüche 12 bis 20, **dadurch gekennzeichnet, dass** die Aggregate eine scheinbare Dichte zwischen 1,4 und 1,5 haben.

22. Herstellungsverfahren für einen Gegenstand aus mit Talk dotiertem thermoplastischem Material, wobei die Talkdotierung des thermoplastischen Materials gleichzeitig mit seinem Guss erfolgt; und eine feinverteilte feste Zusammensetzung nach irgendeinem der Ansprüche 12 bis 21 verwendet wird.

23. Verfahren gemäß Anspruch 22, **dadurch gekennzeichnet, dass** eine Gusstechnik für das thermoplastische Material verwendet wird, ausgewählt aus der Gruppe Extrusion, Mahlen durch Injektion, Kompression oder Rotation.

## Claims

1. Method of production for a divided solid composition comprising a talc powder of which at least a fraction consists of talc particles connected to each other as aggregates of average dimension greater than that of the said talc particles, **characterised in that** the following steps are carried out:
- mixing under agitation, of a talc powder in weighted proportion of at least about 75 %, based on the total weight of the said composition, and a binder comprising a polyethylene wax in weighted proportion of at least about 6 %, based on the total weight of the said composition; in order to obtain the said mixture, the talc powder and the polyethylene wax, in solid form, are contacted at a temperature at which the said polyethylene wax is in the solid state, and while maintaining agitation the temperature is increased,
- after obtaining a homogeneous powdery mixture, in which the talc particles are at least partially encapsulated by the polyethylene wax, cooling the mixture, and
- granulating the mixture using a granulation press in order to form the said aggregates.

2. Method according to claim 1, **characterised in that** the step of hot mixing is ended after a notable reduction of the volume of the mixture has been detected.

3. Method according to one of claims 1 or 2, **characterised in that** a polyethylene wax with a molar mass comprised between 1,000 and 50,000 g·mol⁻¹ is used.

4. Method according to one of claims 1 to 3, **characterised in that** the mixture is divided up such as to obtain aggregates in the shape of granules of a homogeneous and defined size.

5. Method according to one of claims 1 to 4, **characterised in that** an amount of polyethylene wax is mixed into the talc powder, such that aggregates with a weighted proportion of polyethylene wax of about 20 to 25 % may be obtained.

6. Method according to one of claims 1 to 4, **characterised in that** a mixture of talc and binder in respective quantities is obtained, such that aggregates with a weighted proportion of talc of about 85 to 92 % may be obtained.

7. Method according to claim 6, **characterised in that** prior to mixing the talc powder and the polyethylene wax, the said pre-heated talc powder is mixed with 1 to 2 % of at least one surface active agent selected from: amines, quaternary ammonium salts, quaternary polyammonium salts, carboxylic acids,
the said mixture is obtained at a temperature at least equal to the melting temperature of the said surface active agent(s).

8. Method according to claim 7, **characterised in that** the said surface active agent is used in its liquid state.

9. Method according to one of claims 7 or 8, **characterised in that** a surface active agent is used, selected from: N,N-bis(hydroxymethyl)amine, polytheramine, amine oxide, betaine, stearin, diammonium polydimethylsiloxane.

10. Method according to one of claims 1 to 9, **characterised in that** a polyethylene wax with a molar mass of about 3,800 g·mol⁻¹ and a melting point of about 100°C is used.

11. Method according to one of claims 1 to 10, **characterised in that**, after the mixing stage, the mixture is cooled down passively.

12. Divided solid composition comprising a talc powder of which at least a fraction consists of talc particles connected to each other as aggregates of average dimension greater than that of the said talc particles, **characterised in that** the said aggregates are composed of talc in weighted proportion of at least about 75 %; and a binder comprising a polyethylene wax; the weighted proportion of polyethylene wax in said aggregates being at least about 6 %.

13. Composition according to claim 12, **characterised in that** said polyethylene wax has a molar mass comprised between 1,000 and 50,000 g·mol⁻¹.

14. Composition according to one of claims 12 or 13, **characterised in that** the said talc aggregates in the shape of granules of a homogeneous and defined size.

15. Composition according to one of claims 12 to 14, **characterised in that** the weighted proportion of polyethylene wax is about 20 to 25 %.

16. Composition according to one of claims 12 to 14, **characterised in that** the weighted proportion of talc in the aggregates is about 85 to 92 %.

17. Composition according to claim 16, **characterised in that** the said binder comprises, based on the weight of the aggregates, about 1 to 2 % of at least one surface active agent selected from: amines, quaternary ammonium salts, quaternary polyammonium salts, carboxylic acids.

18. Composition according to claim 17, **characterised in that** the said surface active agent is selected from: N,N-bis(hydroxymethyl)amine, polytheramine, amine oxide, betaine, stearin, diammonium polydimethylsiloxane.

19. Composition according to one of claims 12 to 18, **characterised in that** the said polyethylene wax has a molar mass of about 3,800 g·mol⁻¹ and a melting point of about 100°C is used.

20. Composition according to one of claims 12 to 19, **characterised in that** the said aggregates have an apparent density comprised between 1.2 and 1.7.

21. Composition according to one of claims 12 to 20, **characterised in that** the said aggregates have an apparent density comprised between 1.4 and 1.5.

22. Method of production for an article made of a thermoplastic material doped with talc, wherein the talc doping of the said thermoplastic material is carried out at the same time of its moulding; a divided solid composition conforming to one of claims 12 to 21 is used.

23. Method according to claim 22, **characterised in that** a moulding technique is used for the thermoplastic material, selected from extrusion, injection moulding, compression or rotation.
